# EUROPEAN PATENT SPECIFICATION

(11) **EP 1 284 058 B1**
(45) Date of publication and mention of the grant of the patent: **11.07.2007**
(21) Application number: 01937707.6
(22) Date of filing: 24.05.2001
(51) Int. Cl.: H04B 10/08

(54) **OPTICAL TRANSMISSION SYSTEMS AND METHODS INCLUDING OPTICAL PROTECTION**
OPTISCHE ÜBERTRAGUNGSSYSTEME UND -VERFAHREN MIT OPTISCHEM SCHUTZ
SYSTEMES DE TRANSMISSION OPTIQUE ET PROCEDES INCLUANT UNE PROTECTION OPTIQUE

(30) Priority: 24.05.2000 US 578089
(43) Date of publication of application: 19.02.2003
(73) Proprietor: Corvis Corporation, Columbia, MD 21046-9400 (US)
(72) Inventor: SMITH, David, F. Corvis Corp. Intel.Property Dep., Columbia, MD 21046-9400 (US); COPELAND,David,J. Corvis Corp. Intel.Property Dep., Columbia, MD 21046-9400 (US); JANI, Dharmesh,B. Corvis Corp. Intel.Property Dep., Columbia, MD 21046-9400 (US)
(74) Representative: Callon de Lamarck, Jean-Robert
(86) International application number: PCT/US2001/016883
(87) International publication number: WO 2001/091339

(56) References cited:
- EP-A- 0 851 614
- EP-A- 0 917 313

## Description

### BACKGROUND OF THE INVENTION

The present invention is directed generally to optical transmission systems. More particularly, the invention relates to optical transmission systems including protection capability for use in optical communication systems.

Communications transport systems are used to transport information over a substantial portion of the world. This extensive communication access requires enormous amounts of equipment to provide the necessary infrastructure for the systems. In addition, much of the equipment and almost all of the transport media is remotely located and necessarily exposed to the environment.

In view of the necessary exposure of transmission systems to uncontrolled environments, it is not uncommon for failures to occur in links along a transmission path. However, if communication systems are to be effective it is necessary to have a high degree of reliability in the system. The reliability of service provided by a transmission system is inversely proportional to the frequency of failures in the transmission system.

One of the most common failures in fiber optic transmission systems is a fiber break. When a fiber break or other failure occurs in a transmission link, the traffic intended to pass through the link must be rerouted through another path until the link is restored. Another common source of failures in optical transmission systems is an equipment failure. The amount of traffic that is lost upon an equipment failure depends upon the particular piece of failed equipment in the system. For example, in most, if not all, currently available fiber optic transmission systems, a line amplifier failure will result in a complete loss of traffic traveling through an optical link containing the failed line amplifier. Whereas, a transmitter or a receiver failure will generally result only in the loss of the traffic carried by wavelengths associated with the failed transmitter or receiver. When an amplifier fails or fiber cut occurs, traffic must be rerouted through a new path. When a transmitter or receiver fails, the traffic must be transferred to different transmitter and/or receiver using the same or a different channel and/or transmission path.

Service providers have developed protection schemes to ensure service quality and provide automatic traffic restoration upon a failure in a transmission link and have required redundant equipment systems to decrease the effective failure rate of the link. Protection schemes generally are categorized based on the relationship between a working channel that carries traffic during normal operation and its corresponding protection channel that carries traffic if the working channel is unavailable. If traffic is transmitted simultaneously on both the working channel and the protection channel, the schemes are referred to as providing one plus one ("1+1") protection. Conversely, if traffic is switched from the working channel to the protection channel or from a working path to a protection path only when a failure occurs, the schemes are referred to as one for one ("1:1") protection schemes. More generally, N protection channels or paths can be shared between M working channels or paths, which is generally designated as N:M protection. Similarly, N protection channels can carry the same information as the working channel to provide 1+N protection.

In the event of a failure of the working path, a destination node for the traffic will switch to the protection path to receive the traffic in 1+1 schemes. In 1:1 schemes, origin and destination nodes are switched to the protection channel in path switched schemes, while nodes adjacent to the failure are switched in line and span switched schemes to route traffic around the failure. Various combinations of path, line, and span switching schemes can also be employed in 1:1 schemes.

In addition, failures in a network are detected by various local controllers in the nodes and must be communicated to the other nodes via the network management systems. The latency involved with providing notification throughout the network via the network management system can complicate and decrease the efficiency of the protection process.

As the demand for transmission capacity continues to grow, there is an increasing need to efficiently use the available transmission capacity and protect the information being transported through the systems. In addition, the increased amount of traffic being carried on each fiber places increased importance on the ability to effectively protect the information, because each failure results in higher revenue losses for service providers. Accordingly, there is a need for optical transmission protection schemes and network configurations that provide effective protection with increasing wavelength efficiencies for use in long distance communication systems.

US 5 355 250 discloses an optical-fibre transmission system with optical amplifiers, comprising protection means adapted to interrupt the light emission along the entire line in the presence of an interruption of the optical fibre and to reactivate it automatically when its continuously is restored.

In order to deactivate the entire line when a failure occurs, the amplifiers and transmitters present along the line are shut down in cascade. Hence detected failures in a network can not be communicated optically trough the transmission system.

### SUMMARY OF THE INVENTION

The present invention addresses the need for optical transmission systems including optical protection systems, apparatuses, and methods that provide increased reliability in the system. The optical system generally includes optical transmitters including transmitter controllers configured to vary the optical power of the transmitter, when degraded or loss of signal conditions are detected proximate the transmitter. The transmitter controller varies the optical power of the transmitter to an extent sufficient to generate a degraded signal condition, such as a loss of signal condition, along the optical path of the signal. In transmission systems that require cascaded transmitters and receivers to span a transmission path, generating degraded signal conditions by controlling the transmitter can provide a low latency propagation of an error condition through the system.

The degraded signal condition can be used to trigger a protection switch at various nodes in the system. In various embodiments, optical and/or electrical switches are included in the nodes along with the transmitters and/or receivers to provide redundant paths through the system, as well as into and out of the system. Upon the detection of signal degradation or a loss of signal, the transmitter controller can shut down its associated transmitter to propagate optically the condition to the switch. Signal monitors at the switch will detect the degraded signal at the switch and initiate the protection switch. The degraded signal condition can be propagated optically in various in-band and/or out-of-band forms to trigger a protection switch and/or other actions along a signal transmission path. For example, a loss of signal condition and/or other "loss of" conditions, such as synchronization, frame, etc., can be generated or created, signals to trigger an action can be transmitted in the signal overhead or via tones, separate signals, etc., or conditions that generate a number of errors sufficient to trigger a protection switch and/or other desired actions in the system.

In this manner, degraded signal conditions upstream of the transmission path can be used to trigger a protection switch along the signal transmission path. The present invention provides advantages over the prior art, for example, by eliminating the sole reliance in many systems upon communication between various controllers and the network management system to detect and initiate protection switching. Accordingly, the present invention addresses the aforementioned desires to provide optical systems that have increased performance. These advantages and others will become apparent from the following detailed description.

### BRIEF DESCRIPTION OF THE DRAWINGS

Embodiments of the present invention will now be described, by way of example only, with reference to the accompanying drawings for the purpose of illustrating embodiments only and not for purposes of limiting the same, and:
Figs. 1 and 2 show optical system embodiments; and,
Figs. 3 - 11 show optical system interface embodiments.

### DETAILED DESCRIPTION OF THE INVENTION

Optical systems 10 of the present invention generally include a plurality of optical processing nodes 12 interconnected by one or more guided or unguided optical transmission media 14, such as optical fiber. Optical amplifiers 16 can be disposed periodically between the optical processing nodes 12 to overcome attenuation in the medium 14 and proximate the optical processing nodes 12 to overcome loss associated with the nodes 12. The optical processing nodes 12 can include optical transmitters 18 configured to transmit information via optical signals in one or more information carrying signal wavelengths, or signal channels, λₛᵢ through the transmission media 14 to optical receivers 20 located in other processing nodes 12.

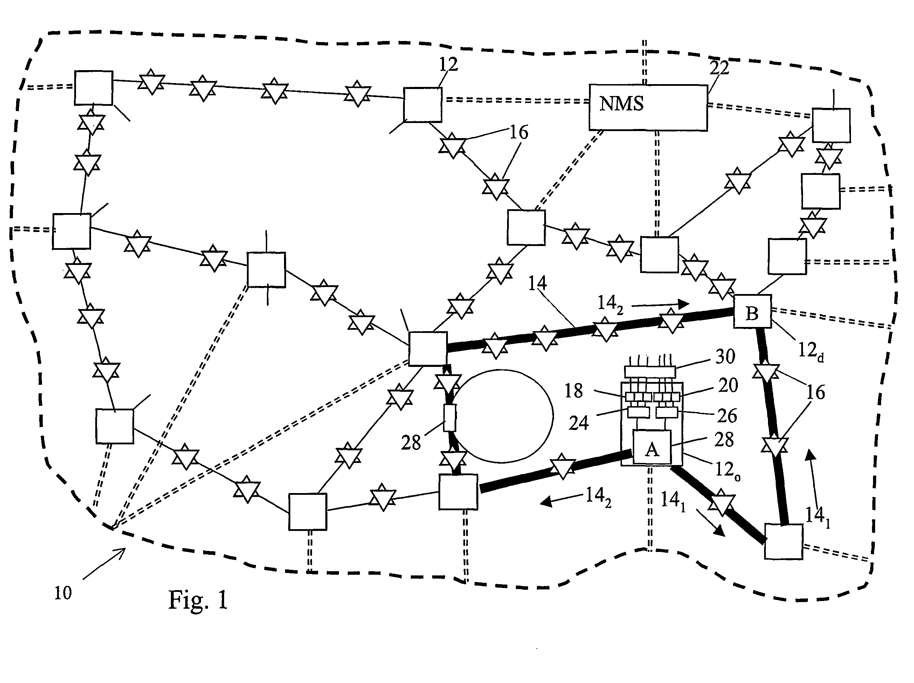

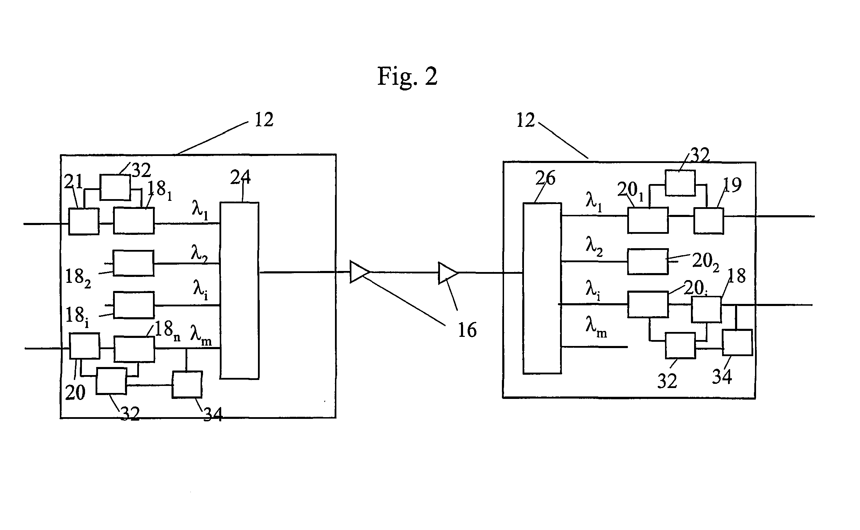

A network management system ("NMS") 22 can be provided to configure the system 10 in multi-dimensional networks (Fig. 1) or in one or more point to point links interconnecting the nodes 12 (Fig. 2). Furthermore, the system 10 can be configured to provide uni-directional or bi-directional transmission in each fiber 14 and can employ the same or different wavelengths in each link between nodes 12.

The transmitters 18 used in the system 10 will generally include a narrow bandwidth laser optical source, such as a DFB laser, that provides an optical carrier. The transmitters 18 also can include other coherent narrow or broad band sources, such as sliced spectrum sources and fiber lasers, as well as suitable incoherent optical sources, as appropriate. Information can be imparted to the optical carrier either by directly modulating the optical source or by externally modulating the optical carrier emitted by the source. Alternatively, the information can be imparted to an electrical carrier that can be upconverted onto an optical wavelength to produce the optical signal. Electro-optic (e.g., LiNbO₃), electro-absorption, other types of modulators and upconverters can be used in the transmitters 18.

Similarly, the optical receiver 20 used in the present invention can include various detection techniques, such coherent detection, optical filtering and direct detection, and combinations thereof. Generally speaking, N transmitters 18 can be used to transmit M different signal wavelengths to J different receivers 20. Employing tunable transmitters 18 and receivers 20 in the optical nodes 12 in a network, such as in Figs. 1-2, can provide additional versatility in the system 10.

Optical combiners 24 can be provided to combine optical signals from different optical paths onto a common path, e.g. fiber. Likewise, optical distributors 26 can be provided to distribute optical signals from a common path to a plurality of different optical paths. The optical combiners 24 and distributors 26 can include wavelength selective and non-selective ("passive") fiber and free space devices, as well as polarization sensitive devices. Passive or WDM couplers/splitters, circulators, dichroic devices, prisms, gratings, etc. can be used alone, or in combination with various tunable or fixed, high, low, or band pass or stop, transmissive or reflective filters, such as Bragg gratings, Fabry-Perot, Mach-Zehnder, and dichroic filters, etc. in various configurations of the optical combiners 28 and distributors 30. Furthermore, the combiners 24 and distributors 26 can include one or more serial or parallel stages incorporating various devices to multiplex, demultiplex, and multicast signal wavelengths λᵢ in the optical systems 10.

The optical processing nodes 12 may also include other optical components, such as one or more add/drop devices and optical switches/routers/cross-connects 28 optically interconnecting the transmitters 18 and receivers 20. For example, broadcast and/or wavelength reusable, add/drop devices, and optical and electrical/digital cross connect switches and routers can be configured via the network management system 22 in various topologies, i.e., rings, mesh, etc. to provide a desired network optical connectivity.

The optical amplifiers 20 can include one or more serial and/or parallel amplifier stages. Distributed and concentrated/lumped, doped, e.g. erbium, and Raman fiber amplifier stages can be locally or remotely pumped with optical energy from an optical source. Semiconductor and other types of amplifier stages also can be included in the optical amplifiers 20, as well as various other stages for optical regeneration, dispersion compensation, isolation, filtering, add/drop, etc. The amplifier 20 can include various optical combiners 24, as previously described, to combine optical/pump energy from a plurality of optical/pump sources and provide it to an optical amplifying medium.

In the present invention, the transmitters 18 and receivers 20 can be directly connected to other electrical or optical systems via a switch 30. The switch 30 can be further connected to various interfacial devices, such as IP routers, ATM switches, etc., to provide interface flexibility at the periphery of the system 10. The interfacial devices can be configured to receive, convert, and provide information in one or more various protocols, encoding schemes, and bit rates to the transmitters 18, and perform the converse function for the receivers 20. The interfacial devices also can be used to provide protection switching in various nodes 12 depending upon the configuration. The interfacial devices can be electrically connected to the switch 30 or optically connected via short, intermediate, and/or long reach optical interfaces.

In the present invention, the system 10 includes transmitter controllers 32 configured to receive monitoring status signals from a signal monitoring device 34 regarding information provided as input to the transmitters 18, such as shown in Fig. 2. The signal monitoring devices 34 can be monitoring photodiodes or receivers similar to the receivers 20, as well as other optical or electrical signal monitoring devices. Signal monitoring devices 34 can be used to monitor input and/or output signals from the associated transmitters 18 and provide corresponding input and output monitoring status signals to the transmitter controller 32. Output monitoring signals can be compared to the input monitoring signals to detect when the transmitters 18 are degrading the information carried by signal channels.

The transmitter controller 32 is configured to vary, or control, the performance one or more associated transmitters to provide an output signal in a form that one or more receivers 20 or other monitoring device along the path of the optical signal will detects as a degraded signal, when the signal monitoring device 34 indicates a degraded signal status condition. For example, the transmitters 18 can be shut down to an extent that the receivers 20 configured to receive the output from the transmitters 18 detect a loss of signal "LOS" condition with respect to the output. The transmitters 18 can be shut down by turning off power supplied to the optical source providing the optical carrier in the transmitter 18. Also, the power supplied to the optical source can be decreased to an extent necessary to produce the loss of signal condition. Degraded status signals would typically result from detection of a LOS condition, errors exceeding an error threshold amount, or other degraded signal conditions detected in the system 10. Error detection can be performed using various techniques, such as forward error correction, SONET/SDH error monitoring, or other error monitoring techniques.

When the transmitter controller 32 varies the performance of its associated transmitters, the degraded signal condition will be propagated optically through the system 10. The optical propagation greatly accelerates and simplifies degraded signal status notification throughout the system 10 and enables rapid protection switching in the system 10. In transmission systems 10 that include plurality of cascaded transmitters 18 and receivers 20, the shutting down of the transmitters can provide a low latency method for propagating a degraded signal condition in the system 10.

Degraded signal conditions can be conditions that are controlled by the controller 32 such that output signals are produced in various in-band and/or out-of-band forms that can be propagated and trigger a protection switch and/or other actions when detected along a signal transmission path. For example, a loss of signal condition and/or other "loss of" conditions, such as synchronization, frame, etc., as well as alarm indication signal can be produced. Signals to trigger switching and other actions can be transmitted via the signal overhead, e.g., SONET or forward error correction, tones on the signal, separate signals from different transmitters, etc. The controller 32 can vary, or control, the transmitter performance such that the output signal results in a sufficient number of errors are detected to trigger a protection switch or other desired actions in the system 10.

The degraded status signal monitoring of the present invention can be used alone or in conjunction with traditional monitoring and switching schemes to provide additional protection in the system 10. For example, the degraded status signal generally will be sent up to the network management system 22, which typically would have to initiate the protection switching. When the degraded status signal is optically propagated to initiate protection switching, the network management system 22 may only have to confirm that the protection switching has been initiated, instead of actually initiating the protection switching.

In addition, the degraded status signal can also be propagated along with system supervisory information on the fiber upon which the degraded status signal was detected, as well as other fibers that are present at the node 12. The degraded status signal that is received at other nodes 12 may be also be forwarded to the network management system 22 providing it with additional confirmation of the degraded status signal.

The transmitters 18 and receivers 20 can configured to provide full regeneration within the optical system 10, as well as error correction. Full regeneration and error correction prevents the propagation and accumulation of errors in multiple spans serially connected by regenerators. Therefore, errors can be detected and degraded status signals generated and optically propagated from each regeneration node in the optical system 10, as well as at the destination node 12_{d} in the system 10. Alternatively, the receivers 20 can be directly connected to the transmitters 18 in a transponder configuration without performing any regeneration functions or error correction.

The optical propagation of a degraded status signal can be implemented with various protection schemes, such as those described in the background, as well as others that may be known in the art. For example, in 1+N optical protection schemes, information will be transmitted from an origin node 12ₒ in a first optical signal wavelength λ₁ in a first optical fiber path 14₁ as a "working channel" to a destination node 12_{d}. The information will also be transmitted via at least a second optical fiber path 14₂ on at least a first "protection channel". A degraded status signal in any of the working or protection channels will be propagated through the system 10 to the destination node 12_{d} as a LOS condition.

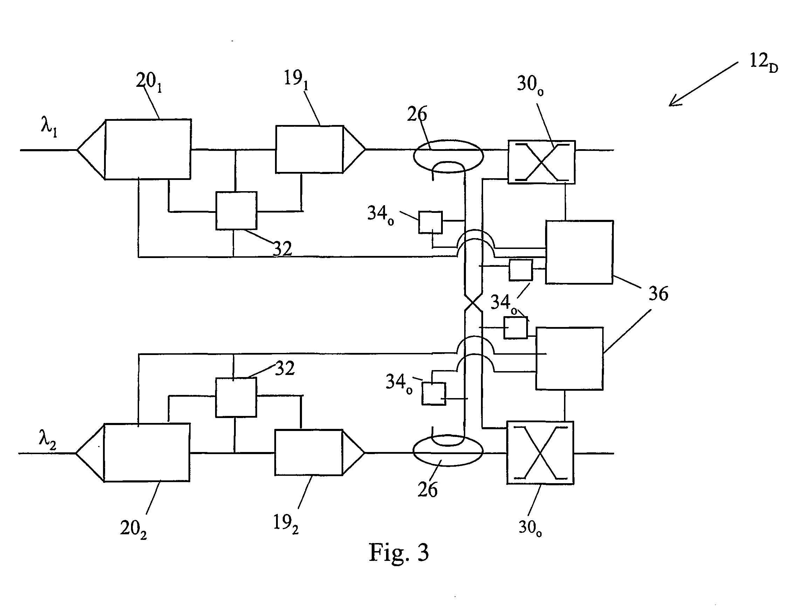

At the destination node 12_{d}, a switch 30 can be provided to select either the working channel or one of the protection channels for transmission to further optical or electrical systems, as shown in Fig. 3. Alternatively, the working and protection channels can be passed to the further system without selecting one of the channels.

For example, the switch 30 can be configured to provide the working channel to the further system in a first configuration and a protection channel in a second configuration. If the LOS condition is propagated for the working channel, the switch 30 performs a protection switch from the first configuration to the second configuration, thereby providing one of the protection channels to the further system. The switching can be part of 1+N or 1:N protection schemes. Additionally, in 1+N protection schemes, if an optically propagated LOS condition is associated with a protection channel, the switch 30 can be prevented from initiating a protection switch to that protection channel until corrective action is taken.

In various embodiments, as shown in Figs. 3-7, the working channel and protection channels can be received using separate receivers 20₁ and 20₂, and converted to respective electrical signals. The working and protection electrical signals can be electronically processed (i.e., reshaped, retimed, recoded, reformatted, etc.) and either optically retransmitted or directly provided to an electrical system. If the optical system 10 is connected to a different optical system, the destination node 12_{d} can include an interface transmitter 19 to communicate with the further optical system. The interface transmitter 19 can be a short, intermediate or long reach interface transmitter used to transmit information via a single wavelength per fiber, as opposed to transmitters 18 used in systems that have one or more wavelengths transmitted per fiber.

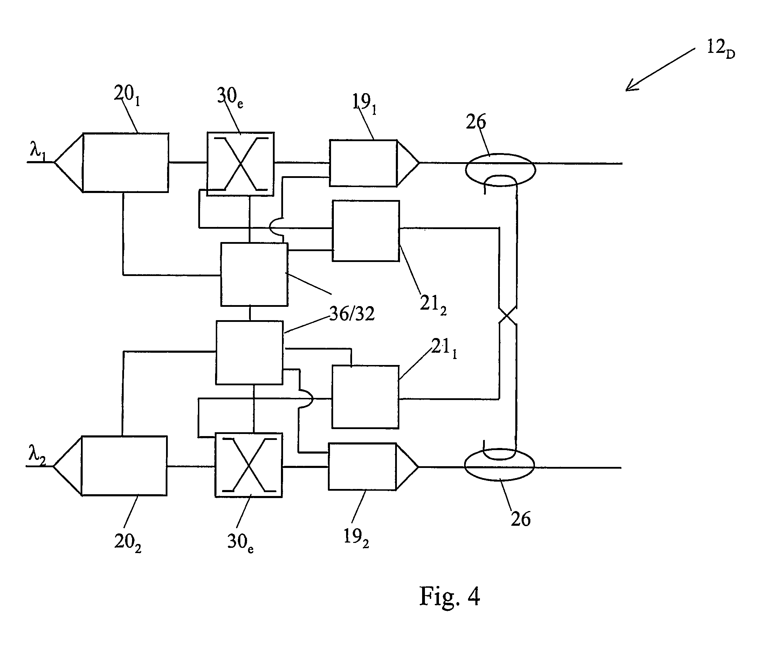

The switch 30 can be an optical line switch 30ₒ (Figs. 3, and 5-7) or an electrical switch 30ₑ (Fig. 4) depending upon the configuration of the system 10. In Fig. 3, respective first and second interface transmitters 19₁ and 19₂ are provided to transmit the working channel and the protection channel to first and second input ports of the optical switch 30ₒ, respectively. The optical switch 30ₒ can be configured in a first configuration to switch the working channel from the first input port to a first output port. The optical switch 30ₒ can be further configured in a second configuration to switch the protection channel from the second input port to a first output port.

A local switch controller 36 can be used to control the operation of the switch 30 or the switch controlling functionality can included within the transmitter controller 32 associated with transmitters 18/19 within the destination node 12_{d}. The network management system 22 can provide additional oversight control over the switching operations. In various embodiments, the switch controller 36 receives degraded status signals from the receivers 20 and other signal monitoring devices and controls switching operations, when parameter thresholds are exceeded and LOS conditions detected. The switch controller 36 can be configured to receive monitoring signal from working and protection channel receivers 20₁ and 20₂ to prevent unnecessary switching during service disruptions or other procedures that affect both working and protection channels.

The switch controller 36 can monitor the transmitter 19 output signal using an interface receiver 21 (Fig. 4), a monitoring photodiode, or other signal monitoring device depending upon the monitoring to be performed. In this manner, the switch controller 36 can also detect signal degradation resulting from the transmitters 19 and perform switching operations to protect against failures of transmitters 19 interfacing with external systems. As shown in Figs. 3 and 4, a second switch can be provided, if a redundant interface to the destination electrical system is available.

In Fig. 4 embodiments, electrical switches 30ₑ can be used in lieu of, or in addition to optical switches 30ₒ. Interface receivers 21 can be used to monitor the interface transmitters 19 and to provide electrical protection signals to a second port of a working channel electrical switch 30ₑ. The switch controller 36 can switch the electrical switch 30ₑ to provide the protection electrical signal to the working transmitter 19₁, if the working signal from the receiver 20₁ is lost or degrades in quality. Again, the output of the transmitters 19₁ and 19₂ can be provided to the input port of the optical switch 30ₒ as shown in Fig. 4 embodiments or directly to the further optical system.

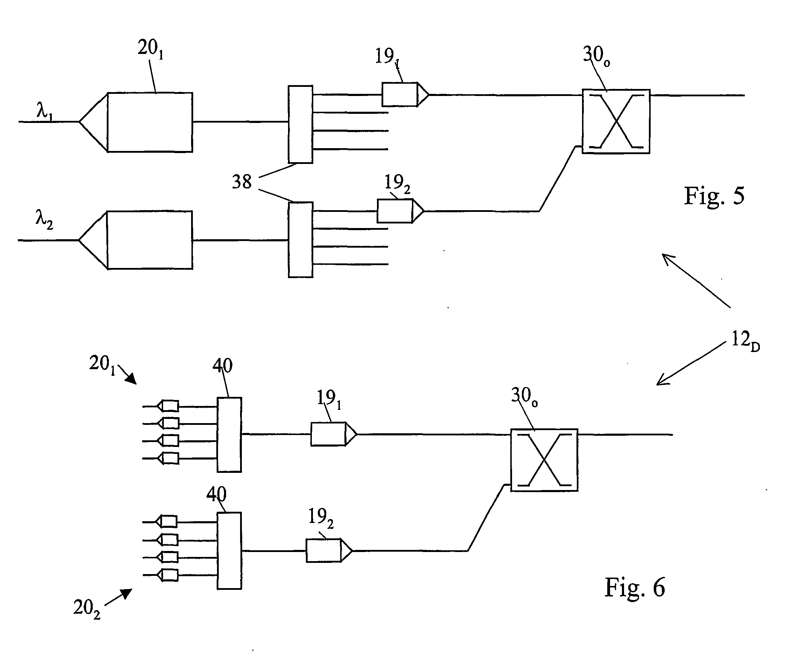

The optical systems 10 can also be used to transmit the information at different bit rates than provided by preceding or further systems. For example, the origination and destination nodes, 12ₒ and 12_{d}, can include electrical demultiplexers 38 and multiplexers 40 to demultiplex or multiplex, respectively, the information into lower or higher bit rate signals (Figs. 5 and 6).

In N:M protection schemes, the LOS condition for the working channel can be optically propagated to the destination node 12_{d} in the same manner as in 1+N schemes. The optical propagation of the degraded status signal can be implemented with other protection schemes, such as line and path switched rings, etc. For example, the switch 30 can be configured to pass the protection channel from a different path to the same or different receiver 20 or switch to a different wavelength than the working channel on the same path.

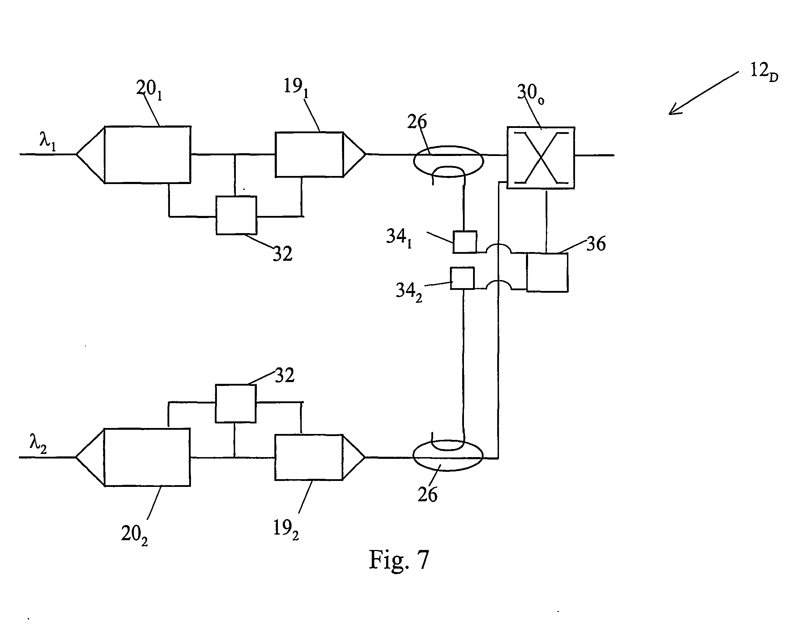

An exemplary of protection switching based on degraded signal conditions can be described with reference to Fig. 7. As shown, two wavelengths λ₁ and λ₂ are received by respective receivers 20₁ and 20₂. Respective controllers 32 are configured to receive information regarding the signals carried by the two wavelengths λ₁ and λ₂. If the controllers 32 detect a degraded signal condition, the controller 32 varies the transmitter 19₁ or 19₂ associated with the receiver that provide the degraded signal condition, such that a loss of signal condition is detected by the signal monitoring device 34. Photodiodes can be used as the signal monitoring devices 34₁ and 34₂ to provide an electrical signal to the switch controller 36. The switch controller 36 receives information pertaining to the status of the signals carried by the two wavelengths λ₁ and λ₂ and configures the switch 30ₒ in either the first or second configuration to pass a non-degraded signal to the output of the switch 30ₒ.

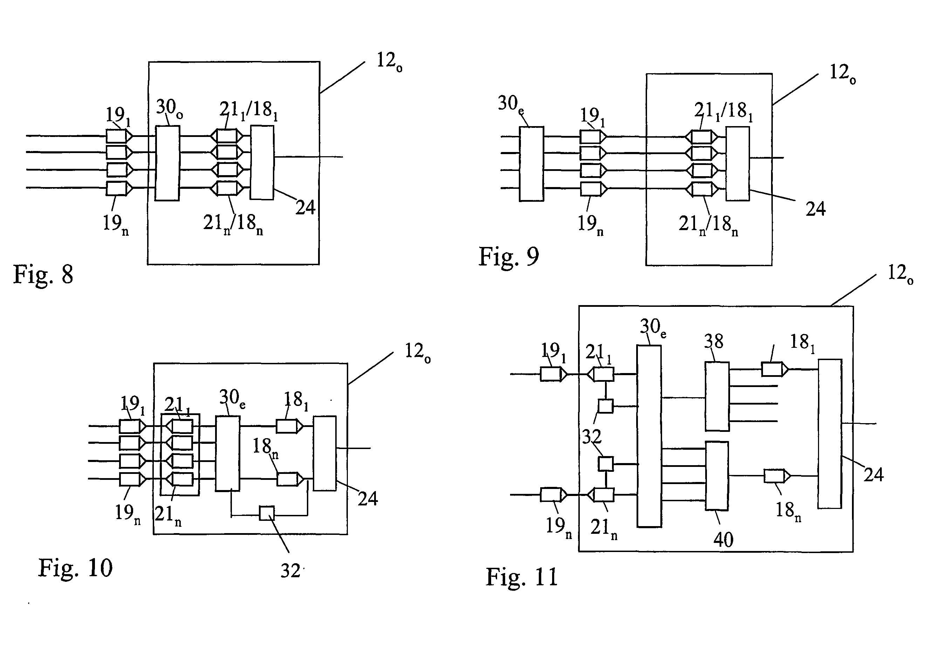

Optical systems 10 of the present invention also can use switches 30 in combination with the transmitters 18 at the originating nodes 12ₒ, as shown in Figs. 8-11. Switches 30 can be provided to selectively switch the information to an appropriate optical transmitter 18₁₋ₙ depending upon the destination of the information (Fig. 8). If the signal being provided to the origin node 12ₒ is degraded or there is a loss of signal, the switch 30 can switch the traffic to the protection transmitter 18₂. The transmitter controller 32 can turn off the formerly working transmitter 18₁ to optically propagate a loss of signal condition through transmission path and trigger a protection switch at the destination node 12_{d}. The optical systems can be configured to transmit information via assigned wavelengths between an origination node 12ₒ and one or more destination nodes 12_{d}. The switches 30 provide not only for rerouting of traffic for protection purposes, but also for dynamic reallocation of bandwidth to accommodate variations in the traffic profile.

Similarly, in Fig. 9 and 10 embodiments, electrical switches 30ₑ are provided to selectively switch information carrying electrical signals to an appropriate optical transmitter. In Fig. 9, the electrical switch 30ₑ can switch the information to the appropriate short reach transmitters 19, which transmits the information to the appropriate interface receiver 21 / transmitter 18 pair in the originating nodes 12ₒ. The electrical switch 30ₑ can alternatively be provided to switch information received by the interface receivers 21 to the optical system transmitters 18 transmitting. The network management system 22 can be used to control the electrical switching or the electrical signal can include destination identifiers in the signal overhead. Analogous to Fig. 6 embodiments, electrical demultiplexers and multiplexers can be provided in combination with the electrical switch 30ₑ in the originating nodes 12ₒ to change the bit rate of the signals (Fig. 11).

Those of ordinary skill in the art will appreciate that numerous modifications and variations that can be made to specific aspects of the present invention without departing from the scope of the present invention. It is intended that the foregoing specification and the following claims cover such modifications and variations.

## Claims

1. An optical system (10) comprising at least a first optical transmitter (18) configured to receive an input signal and transmit information via an output signal, at least one signal monitoring device (34) configured to detect a monitoring signal corresponding to at least one of the input signal and the output signal, **characterized in that** it further comprises:
at least a first optical receiver (20) configured to receive the output signal and adapted to detect the presence of a degraded signal condition;
and, a transmitter controller (32) configured to control the said first transmitter wherein, when the monitoring signal indicates a degraded signal condition, said transmitter controller (32) is adapted to control the first transmitter (18) such that the first transmitter generates a degraded signal condition in its output signal and said first receiver (20) detects the presence of the degraded signal condition in the output signal.

2. The system of claim 1, further comprising a second optical receiver configured to receive an optical signal from a second optical transmitter and provide the input signal to at least the first transmitter and the monitoring signal to said transmitter controller.

3. The system of claim 1, wherein said first optical receiver transmits information via a second input signal, further comprising:
a second optical transmitter configured to receive the second input signal from said first optical receiver and transmit information via a second output signal;
a second optical receiver configured to receive the second output signal and adapted to detect the presence of a degraded signal condition in the second output signal; and,
a second transmitter controller configured to receive a second monitoring signal corresponding to at least one of the second input signal and the second output signal and to control the said second transmitter such that, when the second monitoring signal indicates a degraded signal condition, said second transmitter controller further degrades said second output signal, said second receiver thus detecting the second output signal in a degraded signal condition.

4. The system of claim 3, wherein said second optical receiver transmits information via a third input signal, further comprising:
a third optical transmitter configured to receive the third input signal from said second optical receiver and transmit information via a third output signal;
a third optical receiver configured to receive the third output signal and adapted to detect the presence of a degraded signal condition in the third output signal; and,
a third transmitter controller configured to receive a third monitoring signal corresponding to at least one of the third input signal and the third output signal and to control said third transmitter such that, when the third monitoring signal indicates a degraded signal condition, said third transmitter controller further degrades said third output signal, said third receiver thus detecting the third output signal in a degraded signal condition.

5. The system of claim 1, wherein said transmitter controller is configured to control said first transmitter to generate an in-band signal that said first receiver detects the output signal in a degraded signal condition, when the monitoring signal indicates a degraded signal condition.

6. The system of claim 1, wherein said transmitter controller is configured to include a degraded signal indicator on the output signal provided by said first transmitter, when the monitoring signal indicates a degraded signal condition.

7. The system of claim 1, wherein said transmitter controller is configured to turn off power to said first transmitter, when the monitoring signal indicates a degraded signal condition.

8. The system of claim 1, wherein said transmitter controller is configured to lower the power of said first transmitter to an extent such that said first receiver detects a degraded signal, when the monitoring signal indicates a degraded signal condition.

9. The system of claim 1, wherein said at least one monitoring device is configured to provide an input monitoring signal corresponding to said input signal and an output monitoring signal corresponding to said output signal; and,
said transmitter controller is further configured to shutdown said at least the first transmitter when at least one of the input monitoring signal and the output monitoring signal indicates a degraded signal condition.

10. The system of claim 1, further comprising an electrical switch (30) configured to receive a working channel signal from said at least the first receiver in a first configuration and to receive a protection channel signal in a second configuration, and to switch from the first configuration to the second configuration when said at least the first receiver detects the output signal in a degraded signal condition from said first transmitter.

11. The system of claim 10, wherein said electrical switch includes at least one of an IP router, an ATM switch, and a digital cross-connect switch

12. The system of claim 1, further comprising an optical switch (30) configured to receive a working channel signal from said first receiver in a first configuration and to receive a protection channel signal in a second configuration, and to switch from the first configuration to the second configuration when said at least the first receiver detects the output signal in a degraded signal condition.

13. A method of transmitting a degraded signal condition comprising:
providing an optical transmitter (18) configured to receive an input signal and transmit information via an output signal to an optical receiver (20);
detecting a monitoring signal corresponding to at least one of the input signal and the output signal;
**characterized in that** it further comprises the step of:
controlling the optical transmitter (18) to generate a degraded signal condition in its output signal such that the optical receiver (20) detects in the output signal the presence of a degraded signal condition, when the detected monitoring signal indicates a degraded signal condition.

14. The method of claim 13, wherein said varying includes turning off power supplied to the optical transmitter, when the detected monitoring signal indicates a degraded signal condition.

15. The method of claim 13, wherein said varying includes lowering power supplied to the optical transmitter to an extent that the optical receiver detects a loss of signal, when the detected monitoring signal indicates a degraded signal condition.

16. The method of claim 13, wherein said varying includes shutting down the optical transmitter, when the detected monitoring signal indicates a loss of signal condition.

17. The method of claim 13, wherein said varying includes shutting down the optical transmitter, when the detected monitoring signal indicates errors exceeding an error threshold.

18. The method of claim 13, wherein the degraded signal condition includes at least one of a loss of signal condition, a loss of synchronization condition, a loss of frame condition, an alarm indication signal condition, signal overhead indicating a degraded signal, signal tones indicating a degraded signal, and a number of errors sufficient to trigger a protection switch when detected by the optical receiver.

19. A method of protecting information being transmitted in an optical system (10) comprising:
providing an optical transmitter (18) configured to receive an input signal and transmit information via an output signal to an optical receiver;
detecting a monitoring signal corresponding to at least one of the input signal and the output signal;
**characterized in that** it further comprises the steps of:
configuring a switch (30) to pass the information provided by the optical receiver in a first configuration and to switch to a second configuration when the optical receiver detect a loss of signal;
controlling the optical transmitter (18) to generate a degraded signal condition in its output signal, when the detected monitoring signal indicates a degraded signal condition, such that the optical receiver (20) detects in the output signal the presence of a degraded signal condition; and,
switching the switch (30) from the first configuration to the second configuration, when the optical receiver detects the output signal in the degraded signal condition.

20. The method of claim 19, wherein:
said providing includes providing a working channel optical transmitter and a protection channel optical transmitter configured to receive an input signal and transmit information via an output signal to a working channel optical receiver and a protection channel optical receiver, respectively;
said configuring includes configuring a switch to pass the information provided by the working channel optical receiver in a first configuration and the protection channel optical receiver in a second configuration; and,
said switching includes switching to the second configuration when the working channel optical receiver detect a loss of signal.

## Patentansprüche

1. Optisches System (10) umfassend wenigstens einen ersten optischen Sender (18), der dazu eingerichtet ist, ein Eingabesignal zu empfangen und Information durch ein Ausgabesignal zu senden, wobei wenigstens eine Signalüberwachungseinrichtung (34) dazu eingerichtet ist, ein Überwachungssignal zu detektieren, das wenigstens einem von dem Eingabesignal und dem Ausgabesignal entspricht, **dadurch gekennzeichnet, dass** es weiter umfasst:
wenigstens einen ersten optischen Empfänger (20), der dazu eingerichtet ist, das Ausgabesignal zu empfangen und geeignet ist, die Anwesenheit eines verschlechterten Signalzustands zu detektieren;
und eine Sendersteuerung (32), die dazu eingerichtet ist, den ersten Sender zu steuern, wobei, wenn das Überwachungssignal einen verschlechterten Signalzustand angibt, die Sendersteuerung (32) geeignet ist, den ersten Sender (18) zu steuern, so dass der erste Sender einen verschlechterten Signalzustand in seinem Ausgabesignal sendet und der zweite Empfänger (20) die Anwesenheit des verschlechterten Signalzustands im Ausgabesignal detektiert.

2. System gemäß Anspruch 1, welches weiter einen zweiten optischen Empfänger umfasst, der dazu eingerichtet ist, ein optisches Signal von einem zweiten optischen Sender zu empfangen und das Eingabesignal wenigstens dem ersten Sender und das Überwachungssignal der Sendersteuerung zu liefern.

3. System gemäß Anspruch 1, bei welchem der erste optische Empfänger Information durch ein zweites Eingabesignal sendet, weiter umfassend:
einen zweiten optischen Sender, der dazu eingerichtet ist, das zweite Eingabesignal vom ersten optischen Empfänger zu empfangen und Information durch ein zweites Ausgabesignal zu senden;
einen zweiten optischen Empfänger, der dazu eingerichtet ist, das zweite Ausgabesignal zu empfangen und geeignet ist, die Anwesenheit eines verschlechterten Signalzustands im zweiten Ausgabesignal zu detektieren; und
eine zweite Sendersteuerung, die dazu eingerichtet ist, ein zweites Überwachungssignal zu empfangen, das wenigstens einem von dem zweiten Eingabesignal und dem zweiten Ausgabesignal entspricht, und den zweiten Sender so zu steuern, dass, wenn der zweite Überwachungszustand einen verschlechterten Signalzustand angibt, die zweite Sendersteuerung das zweite Ausgabesignal weiter verschlechtert, wobei der zweite Empfänger somit das zweite Ausgabesignal in einem verschlechterten Signalzustand detektiert.

4. System gemäß Anspruch 3, bei welchem der zweite optische Empfänger Information durch ein drittes Eingabesignal sendet, weiter umfassend:
einen dritten optischen Sender, der dazu eingerichtet ist, das dritte Eingabesignal vom zweiten optischen Empfänger zu empfangen und Information durch ein drittes Ausgabesignal zu senden;
einen dritten optischen Empfänger, der dazu eingerichtet ist, das dritte Ausgabesignal zu empfangen und geeignet ist, die Anwesenheit eines verschlechterten Signalzustands im dritten Ausgabesignal zu detektieren; und
eine dritte Sendersteuerung, die dazu eingerichtet ist, ein drittes Überwachungssignal zu empfangen, das wenigstens einem von dem dritten Eingabesignal und dem dritten Ausgabesignal entspricht, und den dritten Sender so zu steuern, dass, wenn das dritte Überwachungssignal einen verschlechterten Signalzustand angibt, die dritte Sendersteuerung das dritte Ausgabesignal weiter verschlechtert, wobei der dritte Empfänger somit das dritte Ausgabesignal in einem verschlechterten Signalzustand detektiert.

5. System gemäß Anspruch 1, bei welchem die Sendersteuerung dazu eingerichtet ist, den ersten Sender zu steuern, um ein bandinternes Signal, dass der erste Empfänger das Ausgabesignal in einem verschlechterten Signalzustand detektiert, zu erzeugen, wenn das Überwachungssignal einen verschlechterten Signalzustand angibt.

6. System gemäß Anspruch 1, bei welchem die Sendersteuerung dazu eingerichtet ist, einen verschlechterten Signalindikator auf dem Ausgabesignal zu umfassen, das vom ersten Sender geliefert wird, wenn das Überwachungssignal einen verschlechterten Signalzustand angibt.

7. System gemäß Anspruch 1, bei welchem die Sendersteuerung dazu eingerichtet ist, Strom zum ersten Sender abzuschalten, wenn das Überwachungssignal einen verschlechterten Signalzustand angibt.

8. System gemäß Anspruch 1, bei welchem die Sendersteuerung dazu eingerichtet ist, den Strom des ersten Senders auf ein Maß zu verringern, so dass der erste Empfänger ein verschlechtertes Signal detektiert, wenn das Überwachungssignal einen verschlechterten Signalzustand angibt.

9. System gemäß Anspruch 1, bei welchem die wenigstens eine Überwachungseinrichtung dazu eingerichtet ist, ein Eingabeüberwachungssignal zu liefern, das dem Eingabesignal entspricht, und ein Ausgabeüberwachungssignal, das dem Ausgabesignal entspricht; und
die Sendersteuerung weiter dazu eingerichtet ist, den wenigstens ersten Sender abzuschalten, wenn wenigstens eines von dem Eingabeüberwachungssignal und dem Ausgabeüberwachungssignal einen verschlechterten Signalzustand angibt.

10. System gemäß Anspruch 1, welches weiter einen elektrischen Switch (30) umfasst, der dazu eingerichtet ist, ein Arbeitskanalsignal von wenigstens dem ersten Empfänger in einer ersten Konfiguration zu empfangen und ein Schutzkanalsignal in einer zweiten Konfiguration zu empfangen, und von der ersten Konfiguration zur zweiten Konfiguration umzuschalten, wenn wenigstens der erste Empfänger das Ausgabesignal in einem verschlechterten Signalzustand vom ersten Sender detektiert.

11. System gemäß Anspruch 10, bei welchem der elektrische Switch wenigstens einen der folgenden umfasst: einen IP-Router, einen ATM-Switch und einen digitalen Crossconnect-Switch.

12. System gemäß Anspruch 1, welches weiter einen optischen Switch (30) umfasst, der dazu eingerichtet ist, ein Arbeitskanalsignal vom ersten Empfänger in einer ersten Konfiguration zu empfangen und ein Schutzkanalsignal in einer zweiten Konfiguration zu empfangen, und um von der ersten Konfiguration zur zweiten Konfiguration umzuschalten, wenn wenigstens der erste Empfänger das Ausgabesignal in einem verschlechterten Signalzustand detektiert.

13. Verfahren zum Senden eines verschlechterten Signalzustands, welches umfasst:
Bereitstellen eines optischen Senders (18), der dazu eingerichtet ist, ein Eingabesignal zu empfangen und Information durch ein Ausgabesignal an einen optischen Empfänger (20) zu senden;
Detektieren eines Überwachungssignals, das wenigstens einem von dem Eingabesignal und dem Ausgabesignal entspricht; **dadurch gekennzeichnet, dass** es weiter den folgenden Schritt umfasst:
Steuern des optischen Senders (18), um einen verschlechterten Signalzustand in seinem Ausgabesignal zu erzeugen, so dass der optische Empfänger (20) im Ausgabesignal die Anwesenheit eines verschlechterten Signalzustands detektiert, wenn das detektierte Überwachungssignal einen verschlechterten Signalzustand angibt.

14. Verfahren gemäß Anspruch 13, bei welchem das Variieren ein Abschalten des dem optischen Senders zugeführten Stroms umfasst, wenn das detektierte Überwachungssignal einen verschlechterten Signalzustand angibt.

15. Verfahren gemäß Anspruch 13, bei welchem das Variieren ein Verringern des dem optischen Sender zugeführten Stroms in einem Umfang umfasst, dass der optische Empfänger einen Signalverlust detektiert, wenn das detektierte Überwachungssignal einen verschlechterten Signalzustand angibt.

16. Verfahren gemäß Anspruch 13, bei welchem das Variieren ein Abschalten des optischen Senders umfasst, wenn das detektierte Überwachungssignal einen Signalzustandsverlust angibt.

17. Verfahren gemäß Anspruch 13, bei welchem das Variieren ein Abschalten des optischen Senders umfasst, wenn das detektierte Überwachungssignal Fehler angibt, die eine Fehlerschwelle überschreiten.

18. Verfahren gemäß Anspruch 13, bei welchem der verschlechterte Signalzustand wenigstens einen der folgenden umfasst:
eine Minderung des Signalzustands, eine Minderung des Synchronisierungszustands, eine Minderung des Rahmenzustands, einen Alarmangabesignalzustand, einen Signal-Overhead, der ein verschlechtertes Signal angibt, Signaltöne, die ein verschlechtertes Signal angeben, und eine Anzahl an Fehlern, die ausreichend sind, einen Schutzswitch zu triggern, wenn sie vom optischen Empfänger detektiert werden.

19. Verfahren zum Schützen von Information, die in einem optischen System (10) gesendet wird, umfassend:
Bereitstellen eines optischen Senders (18), der dazu eingerichtet ist, ein Eingabesignal zu empfangen und Information durch ein Ausgabesignal an einen optischen Empfänger zu senden;
Detektieren eines Überwachungssignals, das wenigstens einem von dem Eingabesignal und dem Ausgabesignal entspricht; **dadurch gekennzeichnet, dass** es weiter die folgenden Schritte umfasst:
Einrichten eines Switch (30), um die Information weiterzugeben, die vom optischen Empfänger in einer ersten Konfiguration bereitgestellt wird, und zu einer zweiten Konfiguration umzuschalten, wenn der optische Empfänger einen Signalverlust detektiert;
Steuern des optischen Senders (18), um einen verschlechterten Signalzustand in seinem Ausgabesignal zu erzeugen, wenn das detektierte Überwachungssignal einen verschlechterten Signalzustand angibt, so dass der optische Empfänger (20) im Ausgabesignal die Anwesenheit eines verschlechterten Signalzustands detektiert; und,
Umschalten des Switch (30) von der ersten Konfiguration in die zweite Konfiguration, wenn der optische Empfänger das Ausgabesignal im verschlechterten Signalzustand detektiert.

20. Verfahren gemäß Anspruch 19, bei welchem:
das Bereitstellen ein Bereitstellen eines optischen Arbeitskanal-Senders und eines optischen Schutzkanal-Senders umfasst, die dazu eingerichtet sind, ein Eingabesignal zu empfangen und Information durch ein Ausgabesignal an einen optischen Arbeitskanal-Empfänger bzw. einen optischen Schutzkanal-Empfänger zu senden;
das Einrichten ein Einrichten eines Switch umfasst, um die Information weiterzugeben, die vom optischen Arbeitskanal-Empfänger in einer ersten Konfiguration und vom optischen Schutzkanal-Empfänger in einer zweiten Konfiguration geliefert wird; und
das Umschalten ein Umschalten in die zweite Konfiguration umfasst, wenn der optische Arbeitskanal-Empfänger einen Signalverlust detektiert.

## Revendications

1. Système optique (10) comprenant au moins un premier émetteur optique (18) configuré pour recevoir un signal d'entrée et transmettre des informations via un signal de sortie, au moins un dispositif de monitorage de signal (34) configuré pour détecter un signal de monitorage correspondant à au moins un parmi le signal d'entrée et le signal de sortie, **caractérisé en ce qu'**il comprend en outre:
au moins un premier récepteur optique (20) configuré pour recevoir le signal de sortie et adapté pour détecter la présence d'une condition de signal dégradé;
et, un contrôleur d'émetteur (32) configuré pour commander ledit premier émetteur,-dans lequel, quand le signal de monitorage indique une condition de signal dégradé, ledit contrôleur d'émetteur (32) est adapté pour commander le premier émetteur (18) de manière que le premier émetteur génère une condition de signal dégradé dans son signal de sortie et ledit premier récepteur (20) détecte la présence de la condition de signal dégradé dans le signal de sortie.

2. Système selon la revendication 1, comprenant en outre un deuxième récepteur optique configuré pour recevoir un signal optique provenant d'un deuxième émetteur optique et délivrer le signal d'entrée à au moins le premier émetteur et le signal de monitorage audit contrôleur d'émetteur.

3. Système selon la revendication 1, dans lequel ledit premier récepteur optique transmet des informations via un deuxième signal d'entrée, comprenant en outre :
un deuxième émetteur optique configuré pour recevoir le deuxième signal d'entrée provenant dudit premier récepteur optique et transmettre des informations via un deuxième signal de sortie ;
un deuxième récepteur optique configuré pour recevoir le deuxième signal de sortie et adapté pour détecter la présence d'une condition de signal dégradé dans le deuxième signal de sortie ; et
un deuxième contrôleur d'émetteur configuré pour recevoir un deuxième signal de monitorage correspondant à au moins un parmi le deuxième signal d'entrée et le deuxième signal de sortie et pour commander ledit deuxième émetteur de manière que, quand le deuxième signal de monitorage indique une condition de signal dégradé, ledit deuxième contrôleur d'émetteur dégrade ultérieurement ledit deuxième signal de sortie, ledit deuxième récepteur détectant ainsi le deuxième signal de sortie dans une condition de signal dégradé.

4. Système selon la revendication 3, dans lequel ledit deuxième récepteur optique transmet des informations via un troisième signal d'entrée, comprenant en outre :
un troisième émetteur optique configuré pour recevoir le troisième signal d'entrée provenant dudit deuxième récepteur optique et transmettre des informations via un troisième signal de sortie;
un troisième récepteur optique configuré pour recevoir le troisième signal de sortie et adapté pour détecter la présence d'une condition de signal dégradé dans le troisième signal de sortie ; et
un troisième contrôleur d'émetteur configuré pour recevoir un troisième signal de monitorage correspondant à au moins un parmi le troisième signal d'entrée et le troisième signal de sortie et pour commander ledit troisième émetteur de manière que, quand le troisième signal de monitorage indique une condition de signal dégradé, ledit troisième contrôleur d'émetteur dégrade ultérieurement ledit troisième signal de sortie, ledit troisième récepteur détectant ainsi le troisième signal de sortie dans une condition de signal dégradé.

5. Système selon la revendication 1, dans lequel ledit contrôleur d'émetteur est configuré pour commander ledit premier émetteur pour générer un signal sur bande passante que ledit premier récepteur détecte le signal de sortie, quand le signal de monitorage indique une condition de signal dégradé.

6. Système selon la revendication 1, dans lequel ledit contrôleur d'émetteur est configuré pour inclure un indicateur de signal dégradé sur le signal de sortie délivré par ledit premier émetteur, quand le signal de monitorage indique une condition de signal dégradé.

7. Système selon la revendication 1, dans lequel ledit contrôleur d'émetteur est configuré pour couper la puissance dudit premier émetteur, quand le signal de monitorage indique une condition de signal dégradé.

8. Système selon la revendication 1, dans lequel ledit contrôleur d'émetteur est configuré pour diminuer la puissance dudit premier émetteur dans une mesure telle que ledit premier récepteur détecte un signal dégradé, quand le signal de monitorage indique une condition de signal dégradé.

9. Système selon la revendication 1, dans lequel ledit au moins dispositif de monitorage est configuré pour délivrer un signal de monitorage d'entrée correspondant audit signal d'entrée et un signal de monitorage de sortie correspondant audit signal de sortie ; et
ledit contrôleur d'émetteur est configuré en outre pour éteindre ledit au moins le premier émetteur quand au moins un parmi le signal de monitorage d'entrée et le signal de monitorage de sortie indique une condition de signal dégradé.

10. Système selon la revendication 1, comprenant en outre un commutateur électrique (30) configuré pour recevoir un signal de voie de trafic provenant dudit au moins le premier récepteur dans une première configuration et pour recevoir un signal de voie de protection dans une deuxième configuration, et pour commuter de la première configuration à la deuxième configuration quand ledit au moins le premier récepteur détecte le signal de sortie dans une condition de signal dégradé en provenance dudit premier émetteur.

11. Système selon la revendication 10, dans lequel ledit commutateur électrique comprend au moins l'un parmi un routeur IP, un commutateur ATM et un commutateur répartiteur numérique.

12. Système selon la revendication 1, comprenant en outre un commutateur électrique (30) configuré pour recevoir un signal de voie de trafic provenant dudit premier récepteur dans une première configuration et pour recevoir un signal de voie de protection dans une deuxième configuration, et pour commuter de la première configuration à la deuxième configuration quand ledit au moins le premier récepteur détecte le signal de sortie dans une condition de signal dégradé.

13. Procédé pour la transmission d'une condition de signal dégradé consistant à :
prédisposer un émetteur optique (18) configuré pour recevoir un signal d'entrée et transmettre des informations via un signal de sortie à un récepteur optique (20) ;
détecter un signal de monitorage correspondant à au moins un parmi le signal d'entrée et le signal de sortie ;
**caractérisé en ce qu'**il comprend en outre les étapes consistant à :
commander l'émetteur optique (18) pour générer une condition de signal dégradé dans son signal de sortie de manière que le récepteur optique (20) détecte dans le signal de sortie la présence d'une condition de signal dégradé, quand le signal de monitorage détecté indique une condition de signal dégradé.

14. Procédé selon la revendication 13, dans lequel ladite variation consiste à couper la puissance délivrée à l'émetteur optique, quand le signal de monitorage détecté indique une condition de signal dégradé.

15. Procédé selon la revendication 13, dans lequel ladite variation consiste à diminuer la puissance délivrée à l'émetteur optique dans une mesure telle que le récepteur optique détecte une perte de signal, quand le signal de monitorage détecté indique une condition de signal dégradé.

16. Procédé selon la revendication 13, dans lequel ladite variation consiste à éteindre l'émetteur optique, quand le signal de monitorage détecté indique une condition de perte de signal.

17. Procédé selon la revendication 13, dans lequel ladite variation consiste à éteindre l'émetteur optique, quand le signal de monitorage détecté indique des erreurs dépassant un seuil d'erreur.

18. Procédé selon la revendication 13, dans lequel la condition de signal dégradé au moins un parmi une condition de perte de signal, une condition de perte de synchronisation, une condition de perte de trame, une condition de signal d'indication d'alarme, une en-tête de signal indiquant un signal dégradé, des tonalités de signal indiquant un signal dégradé et un nombre d'erreurs suffisant pour déclencher un commutateur de protection quand il est détecté par le récepteur optique.

19. Procédé pour la protection d'informations transmises dans un système optique (10) consistant à :
prédisposer un émetteur optique (18) configuré pour recevoir un signal d'entrée et transmettre des informations via un signal de sortie à un récepteur optique ;
détecter un signal de monitorage correspondant à au moins un parmi le signal d'entrée et le signal de sortie ;
**caractérisé en ce qu'**il comprend en outre les étapes consistant à :
configurer un commutateur (30) pour transmettre les informations fournies par le récepteur optique dans une première configuration et pour commuter sur une deuxième configuration quand le récepteur optique détecte une perte de signal ;
commander l'émetteur optique (18) pour générer une condition de signal dégradé dans son signal de sortie, quand le signal de monitorage détecté indique une condition de signal dégradé, de manière que le récepteur optique (20) détecte la présence dans le signal de sortie la présence d'une condition de signal dégradé ; et
commuter le commutateur (30) de la première configuration à la deuxième configuration quand le récepteur optique détecte le signal de sortie dans la condition de signal dégradé.

20. Procédé selon la revendication 19, dans lequel :
ladite prédisposition consiste à prédisposer un émetteur optique de voie de trafic et un émetteur optique de voie de protection pour recevoir un signal d'entrée et transmettre des informations via un signal de sortie à un récepteur optique de voie de trafic et un récepteur optique de voie de protection, respectivement ;
ladite configuration consiste à configurer un commutateur pour transmettre les informations fournies par le récepteur optique de voie de trafic dans une première configuration et par le récepteur optique de voie de protection dans une deuxième configuration ; et
ladite commutation consiste à commuter sur la deuxième configuration quand le récepteur optique de voie de trafic détecte une perte de signal.
